# EUROPÄISCHE PATENTSCHRIFT

(11) **EP 2 262 668 B1**
(45) Veröffentlichungstag und Bekanntmachung des Hinweises auf die Patenterteilung: **21.09.2011**
(21) Anmeldenummer: 09732114.5
(22) Anmeldetag: 07.04.2009
(51) Int. Cl.: B60R 21/217

(54) **LUFTSACKBEFESTIGUNG BEI EINEM AIRBAGMODUL**
AIRBAG MOUNTING IN AN AIRBAG MODULE
FIXATION D'UN SAC GONFLABLE DANS UN MODULE AIRBAG

(30) Priorität: 14.04.2008 DE 102008001158
(43) Veröffentlichungstag der Anmeldung: 22.12.2010
(73) Patentinhaber: ZF Friedrichshafen AG, 88038 Friedrichshafen (DE)
(72) Erfinder: FANGMANN, Thomas, 49413 Dinklage (DE); IMKEN, Hans-Jürgen, 49163 Hunteburg (DE); WAGENER, Keit, 49143 Bissendorf (DE)
(86) Internationale Anmeldenummer: PCT/DE2009/050018
(87) Internationale Veröffentlichungsnummer: WO 2009/127206

(56) Entgegenhaltungen:
- DE-A1- 10 048 953
- DE-U1- 29 813 911
- DE-U1- 29 921 416
- GB-A- 2 323 572
- US-A1- 2002 024 197
- US-B1- 6 283 497

## Beschreibung

Die Erfindung betrifft eine Lösung zur Befestigung des Luftsacks in einem Airbagmodul, das heißt zur Festlegung des Luftsacks in dem Gehäuse des Airbagmoduls. Sie bezieht sich auf ein dazu entsprechend ausgebildetes Airbagmodul und dabei insbesondere auf die Befestigung des Luftsacks mittels eines Halterings des Airbagmoduls.

Airbags gehören in modernen Kraftfahrzeugen inzwischen zur Standardausstattung. Unter dem Gesichtspunkt der industriellen Arbeitsteilung und zur Erreichung einer hohen Flexibilität bei der Fertigung sind die Airbags in Form kompletter Airbagmodule ausgebildet, welche durch den Fahrzeughersteller als kompakte Einheit von Zulieferern bezogen und im Fahrzeug verbaut wird.

Bekanntermaßen erfolgt die Entfaltung eines Airbags bei einem Unfall durch das explosionsartige Einströmen eines Gases in den Luftsack. Hierbei wirken relativ hohe Kräfte einerseits auf das Material des Luftsacks und andererseits auf dessen Befestigung im Gehäuse des auch den Gasgenerator umfassenden Airbagmoduls. Zur sicheren Befestigung des Luftsacks in dem Airbagmodul sind unterschiedliche Befestigungslösungen gebräuchlich. Danach erfolgt die Befestigung zum Beispiel durch Umschlingen des Gasgenerators, die Verwendung zusätzlicher Haltebleche oder durch ein Einknüpfen des Luftsacks an Hakenkonturen im Außenbereich des Modulgehäuses. Gegebenenfalls werden dabei im Hinblick auf die bereits angesprochenen hohen Kräfte noch zusätzliche Sicherungsmaßnahmen getroffen.

Bekannt ist ferner eine Fixierung über einen an einer Außenkontur des Modulgehäuses verschnappten Haltering. Eine derartige Lösung wird beispielsweise in der US 6,283,497 B1 beschrieben. Bei der in der Schrift beschriebenen Lösung weist das Gehäuse des Airbagmoduls im Bereich der Einfassung der Austrittsöffnung für den Luftsack einen doppelwandigen Abschnitt auf. Ein von dem Luftsack umschlungener Haltering ist in den Zwischenraum zwischen der inneren und der äußeren Kontur dieses doppelwandigen Gehäuseabschnitts eingefügt und an dessen äußerer Kontur verrastet. Um die Montage des Halterings und seine Verrastung zu ermöglichen muss die Außenkontur elastisch gestaltet sein. Beim so genannten Fangstoß, welcher indem Moment entsteht, in dem der im Auslösefall schlagartig mit dem Gas des Gasgenerators befüllte Luftsack seine maximale Ausdehnung erreicht, wird demnach bei dieser Lösung der Kraftfluss in die nachgiebige Außenkontur des Modulgehäuses eingeleitet. Um trotz der Nachgiebigkeit dieser Kontur eine relativ hoch belastbare Verbindung zwischen dem Haltering für den Luftsack und dem Gehäuse zu erreichen, sind bei einer Verschnappung dieser Art sehr hohe Vorspannkräfte erforderlich. Hierdurch müssen bei der Montage des Airbagmoduls zur Verrastung des Halterings am Gehäuse hohe Montagekräfte aufgewendet werden. Dies wiederum ist mit der Gefahr einer Beschädigung der Konturen des Airbaggehäuses beim Montageprozess verbunden. Zudem ist beim Einsatz des Airbags ein Nachteil darin zu sehen, dass durch die elastische Verformung des Gehäuses beim Entfalten des Airbags unter Umständen die Verrastung, über welche das Airbagmodul im Fahrzeug befestigt ist, negativ beeinflusst werden kann.

Die DE 298 13 911 U1 gattungsgemäße zeigt ferner eine Befestigungsanordnung für einen Luftsack eines Airbagmoduls mit einem Haltering, welcher zwischen einer äußeren und inneren Kontur einer doppelwandig ausgebildeten Gehäuseabschnitts angeordnet ist. Der Haltering weist dabei senkrecht zu seiner Öffnung Rastelemente auf, wobei die Rastelemente als Haken wirken, welche nach innen in Richtung der Gehäusewand gerichtet sind und mit dem Gehäuse verrastet sind, indem sie jeweils unter einen nach außen gerichteten Vorsprung an der inneren Kontur des doppelwandigen Gehäuseabschnitts der Gehäusewand greifen. Zur Begrenzung der einschubtiefe des Halterings in den Zwischenraum des doppelwandigen Gehäuseabschnitts sind dazu in nachteiliger Weise Anschlagelemente notwendig, wobei sowohl der Haltering als auch die innere Kontur des Gehäuseabschnitts entsprechende aufwendige Ausgestaltungen aufweisen.

Des Weiteren zeigt DE 100 48 953 A1 einen Haltering für die Befestigung eines Luftsacks eines Airbagmoduls, wobei der Haltering Rastelemente aufweist, welche Durchbrüche in einer am Boden eines Gehäuse angeordneten Nut durchgreifen. Eine Ausformung am Rastelement wirkt dabei im gerasteten Zustand mit einer Raste an einem an dem Gehäuse ausgebildeten Schenkel zusammen. Nachteilig ist an dieser Ausführung, dass die Ausreißkräfte nur minimal sind, da die Rastelemente keine radialen Sicherungen aufweisen, welche ein Aufbiegen der Rastschenkel verhindern würde.

Aufgabe der Erfindung ist es daher, ein Airbagmodul bereitzustellen, welches die vorgenannten Nachteile bei der Luftsackbefestigung vermeidet. Insbesondere soll, trotz eines einfachen Aufbaus, die Befestigung des Luftsacks derart gestaltet sein, dass sie hohe Kräfte aufnehmen kann, aber andererseits hohe Montagekräfte im Fertigungsprozess, welche zu einer Beschädigung des Airbaggehäuses führen können, vermieden werden.

Die Aufgabe wird durch ein Airbagmodul mit den Merkmalen des Hauptanspruchs gelöst. Vorteilhafte Aus- beziehungsweise Weiterbildungen der Erfindung sind durch die Unteransprüche gegeben.

Das zur Lösung der Aufgabe vorgeschlagene Airbagmodul besteht, wie bekannt, aus einem Gehäuse zur Aufnahme eines zusammengefalteten, befüllbaren Luftsacks und eines Gasgenerators sowie aus einem Haltering zur Festlegung des Luftsacks in dem Gehäuse. Das Gehäuse weist eine Austrittsöffnung für den sich bei der Auslösung des Airbags durch Befüllung mit dem Gas des Gasgenerators schlagartig entfaltenden Luftsack auf. In einem diese Austrittsöffnung einfassenden Gehäuseabschnitt ist das Gehäuse doppelwandig ausgebildet, wobei diese Doppelwandigkeit bezüglich der Umfangsrichtung des Gehäuses gegebenenfalls auch nur bereichsweise, das heißt partiell gegeben ist. Der von dem Luftsack umschlungene Haltering zur Festlegung des Luftsacks ist in einen Zwischenraum zwischen einer inneren Kontur und einer äußeren Kontur dieses zumindest partiell doppelwandigen Gehäuseabschnitts eingefügt und mittels mehrerer auf seinem Umfang angeordneter Rastelemente an der Außenseite des Gehäuses verrastet. Die entsprechenden Rastelemente erstrecken sich annähernd senkrecht zur Öffnung des Halterings (sind jedoch vorzugsweise etwas nach innen geneigt) und weisen einen als Haken wirkenden Abschnitt auf, mittels welchem die Verrastung an dem Gehäuse erfolgt. Das Gehäuse und der Haltering bestehen vorzugsweise aus Kunststoff.

Die vorgenannten Haken der Rastelemente sind nach innen in Richtung der Gehäusewand gerichtet. Die Rastelemente sind mit dem Gehäuse verrastet, indem ihr Haken jeweils unter einen nach außen gerichteten Vorsprung an der bezüglich des doppelwandigen Gehäuseabschnitts innen gelegenen Kontur der Gehäusewand greift. Die Verrastung erfolgt somit nicht an der im Allgemeinen elastischen äußeren Kontur des doppelwandigen Gehäuseabschnitts. Die Verrastung erfolgt vielmehr im Bereich der steifen inneren Kontur dieses Gehäuseabschnitts. Hierdurch werden die beim Fangstoß auftretenden Kräfte unmittelbar in die stabile Seitenwand des Gehäuses des Airbagmoduls eingeleitet. Überraschender Weise hat es sich gezeigt, dass bei einer derartigen Ausbildung des Airbagmoduls die Stabilität der Verbindung zwischen dem Haltering mit dem durch ihn festgelegten Luftsack und dem Gehäuse dadurch, dass sich die Gehäusewand bei der explosionsartigen Befüllung des Luftsack nach außen bewegt, während gleichzeitig die Haken des Halterings nach innen gewandt sind, noch erhöht. Hierdurch ist ein besonders zuverlässiger Halt des Luftsacks am Gehäuse gewährleistet.

Der zumindest partiell doppelwandige Gehäuseabschnitt ist durch eine U-förmige, die Austrittsöffnung einfassende Profilierung der Gehäusewand gebildet. Entsprechend der erfindungsgemäßen Ausbildungsform weist der die beiden Schenkel des entsprechenden U-Profils miteinander verbindende Flächenabschnitt mehrere von den Rastelementen des Halterings durchragte Durchbrüche auf. Der Rand dieser Durchbrüche wird auf der dem inneren Schenkel des U-Profils zugewandten Seite von dem Haken des jeweiligen, die Durchbrüche durchragenden Rastelements hintergriffen. Die Breite der Durchbrüche ist dabei, bezogen auf ihre Erstreckung vom inneren Schenkel zum äußeren Schenkel des U-Profils, geringer als die bezüglich der gleichen Erstreckungsrichtung gegebene Länge des Hakens der Rastelemente. Aufgrund einer elastischen Ausbildung des äußeren Schenkels des U-Profils ist es aber dennoch möglich, die Haken der Rastelemente bei der Montage des Halterings durch die schmaleren Durchbrüche hindurchzuführen.

Die zuvor erläuterte Ausbildungsform kann dadurch weitergebildet sein, dass der äußere Schenkel des U-Profils korrespondierend mit der Anordnung der Durchbrüche in dem die Schenkel des U-Profils verbinden Flächenbereich mehrere Schlitze aufweist. Dabei verlaufen die auf dem Umfang des U-Profils verteilt angeordneten Schlitze jeweils ausgehend vom Übergang des äußeren Schenkels zu dem die Schenkel des U-Profils miteinander verbindenden Flächenbereich in Richtung der von dem U-Profil eingefassten Austrittsöffnung für den Luftsack. Durch diese Maßnahme wird die Elastizität des äußeren Schenkel und somit der äußeren Kontur des doppelwandigen Gehäuseabschnitts erhöht, wodurch wiederum die für das Einfügen und Verrasten des Halterings erforderliche Montagekraft herabgesetzt wird.

Weiterhin kann das U-Profil vorteilhaft so ausgebildet sein, dass sich der Abstand seiner Schenkel in Richtung des sie miteinander verbindenden Flächenbereichs verringert. Hierdurch wird die Klemmwirkung für den Haltering und damit für den ihn umschlingenden Luftsack in vorteilhafter Weise erhöht.

Die vorzugsweise einstückig mit dem Haltring ausgebildeten Rastelement beziehungsweise die an ihnen angeordneten Haken können auf unterschiedliche Weise realisiert sein. Gemäß einer bevorzugten Ausbildungsform können die Rastelemente die Form eines flachen Streifens aufweisen, der aber in einem Abschnitt an seinem Ende unter Ausbildung eines Absatzes verdickt ist. Diese Ausbildungsform kann noch dadurch weitergebildet sein, dass die Rastelemente in dem verdickten Abschnitt an ihrem Ende auf der nach außen gewandten Seite eine nach innen gerichtete Abschrägung aufweisen. Hierdurch wird das Einführen der Rastelemente beziehungsweise ihrer Haken in die Durchbrüche des den zumindest partiell doppelwandigen Gehäuseabschnitt ausbildenden U-Profils erleichtert.

Denkbar ist es auch, die Haken dadurch zu realisieren, dass die Rastelemente an ihren Enden in Richtung der Gehäusewand des Airbagmoduls abgewinkelt sind. Darüber hinaus können die Rastelemente zur Ausbildung der Haken aber auch an ihren Enden in einem Radius in Richtung der Gehäusewand umgebogen sein. Unabhängig von der Art ihrer Realisierung sind die der Gehäusewand zugewandten Haken gemäß einer vorteilhaften Weiterbildung so ausgebildet, dass sie zusätzlich geringfügig in Richtung der Öffnung des Halterings gerichtet sind. Der von ihnen hintergriffene Vorsprung weist dabei eine komplementäre Ausrichtung auf, so dass die Rastwirkung der Rastelemente noch verstärkt wird. In vorteilhafter Weise wird hierdurch der Halt des durch die Verrastung des Halterings an dem Gehäuse befestigten Luftsacks insbesondere im Hinblick auf die beim Fangstoß wirkenden Kräfte verbessert.

Die Erfindung soll nachfolgend anhand eines Ausführungsbeispiels nochmals näher erläutert werden. In den zugehörigen Zeichnungen zeigen:
- Fig. 1:: eine mögliche Ausbildungsform des erfindungsgemäßen Airbagmoduls in einer Explosionsdarstellung,
- Fig. 2:: einen Teil des Gehäuses des Airbagmoduls nach Fig. 1,
- Fig. 3:: die stark schematisierte Schnittdarstellung einer Gehäusewand des Moduls nach Fig. 1,
- Fig. 4:: eine mit der Fig. 3 vergleichbare Darstellung der Wand eines Airbagmoduls nach dem Stand der Technik.

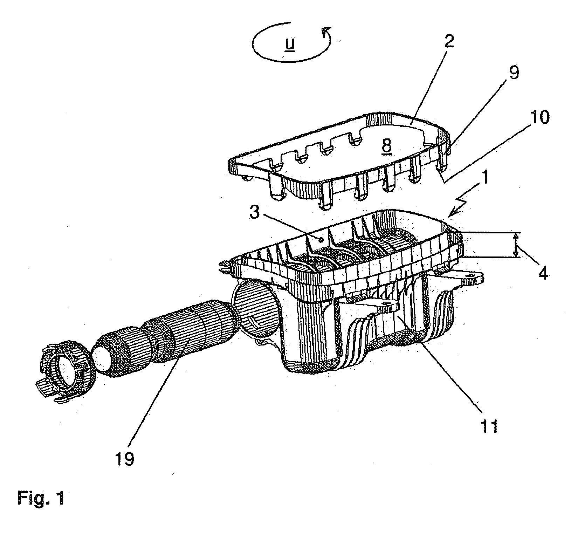

Die Fig. 1 zeigt eine mögliche Ausbildungsform des erfindungsgemäßen Airbagmoduls in einer räumlichen Darstellung. Dabei ist das Airbagmodul in einer Explosivdarstellung gezeigt, wodurch die einzelnen Elemente des Airbagmoduls besonders gut erkennbar sind, wobei die Darstellung das Airbagmodul allerdings ohne den Luftsack zeigt. Das Modul besteht demnach aus dem Gehäuse 1, dem zur Befüllung des nicht gezeigten Luftsacks dienenden und nach der Montage des Moduls durch das Gehäuse aufgenommenen Gasgenerator 19 und dem Haltering 2 für den Luftsack. Wie zu erkennen, weist der Haltering 2, welcher bei der Montage des Moduls von einer an der Öffnung des vorzugsweise aus einem Polyamidgewebe bestehenden Luftsacks ausgebildeten Schlaufe umschlugen wird, mehrere Rastelemente 9 auf, die auf seinem Umfang verteilt angeordnet sind. Die Rastelemente 9 erstrecken sich, wie ersichtlich, annähernd vertikal (das heißt leicht nach innen geneigt) zur Ebene der Öffnung 8 des Halterings 2 und weisen an ihrem Ende einen Haken 10 auf. Dieser ist durch eine sprungartige Verdickung und einen dadurch an dem ansonsten stegförmigen Element gebildeten Absatz 17 realisiert. Dem Grundgedanken der Erfindung folgend, sind die Rastelemente 9 so ausgebildet, dass die an ihren Enden angeordneten Haken 10 nach innen, das heißt in Richtung der Gehäusewand 11, gerichtet sind. Der in der Darstellung nicht gezeigte Luftsack wird später bei der Montage des Moduls über die obere Öffnung des Gehäuses 1 eingebracht, welche im Auslösefall gleichzeitig die Austrittsöffnung 3 für den sich mit dem Gas des Gasgenerators 19 befüllenden Luftsack darstellt.

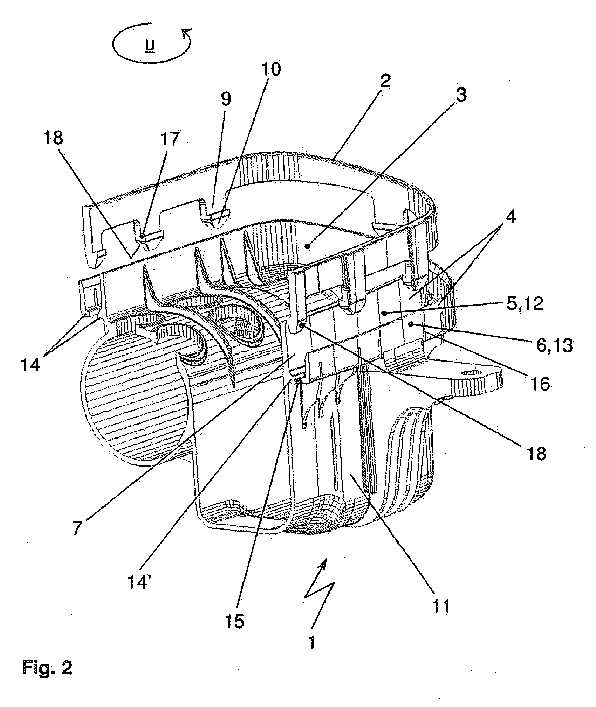

Durch die Fig. 2, welche nochmals einen Ausschnitt des Gehäuses 1 des Airbagmoduls gemäß der Fig. 1 und einen Teil des Halterings 2 zeigt, lässt erkennen, wie der Haltring 2 mit dem zur Festlegung des von den Enden der Rastelemente 9 durchragten, hier aber wiederum nicht gezeigten Luftsacks mit dem Gehäuse 1 verbunden wird. Hierzu wird der Haltering 2 in den Zwischenraum 7 zwischen der inneren Kontur 5 und der äußeren Kontur 6 des doppelwandigen Gehäuseabschnitts 4 eingefügt, welcher die Austrittsöffnung 3 für den Luftsack einfasst. Der im Beispiel durchgängig doppelwandige Gehäuseabschnitt 4 ist durch ein um die Austrittsöffnung 3 umlaufendes U-Profil ausgebildet. Der die Schenkel 12, 13 dieses U-Profils miteinander verbindende Flächenabschnitt 14 weist mehrere nur, hier im linken äußeren Bereich der Abbildung erkennbare Durchbrüche 15 auf, welche aufgrund ihrer mit den Rastelementen 9 des Halterings 2 korrespondierenden Anordnung eine Positionierungshilfe für den Haltering 2 ausbilden. Beim Einfügen des Halterings 2 in den doppelwandigen Gehäuseabschnitt 14 werden die Haken 10 der Rastelemente 9 des Halterings 2 durch diese Durchbrüche 15 hindurchgedrückt. Hierbei weicht der elastische äußere Schenkel 13 des U-Profils nach außen aus, so dass die Haken 10 der Rastelemente 9 durch die Durchbrüche 15 hindurchgedrückt werden können, obwohl deren Breite geringer ist, als die Dicke der die Haken 10 ausbildenden verdickten Bereiche der Rastelemente 9. Wie aus der Figur ersichtlich ist die äußere Kontur 6 des doppelwandigen Gehäuseabschnitts 4 auf ihrem Umfang mehrfach geschlitzt, wobei die entsprechenden, sich in Richtung der Austrittsöffnung 3 erstreckenden Schlitze16, bezogen auf den Umfang u jeweils im Bereich der zuvor angesprochenen Durchbrüche 15 in dem U-Profil angeordnet sind. Hierdurch wird die Elastizität und Nachgiebigkeit dieser äußeren Kontur 6 erhöht, so dass sich die zum Eindrücken der Rastelemente 9 in die Durchbrüche 15 erforderlichen Montagekräfte verringern. Die daraus resultierende zusätzliche Schwächung des Schenkels 13 des die Doppelwand ausbildenden U-Profils ist aufgrund der erfindungsgemäßen Konstruktion hinsichtlich der Funktionssicherheit des Airbagmoduls und seiner Stabilität insgesamt unkritisch, da die beim Fangstoß entstehenden Kräfte, wie bereits ausgeführt über die nach innen gewandten Haken 10 der Rastelemente 9 in die innere Kontur 5 des doppelwandigen Bereichs 4 und über diese in die steife seitliche Gehäusewand 11 eingeleitet werden.

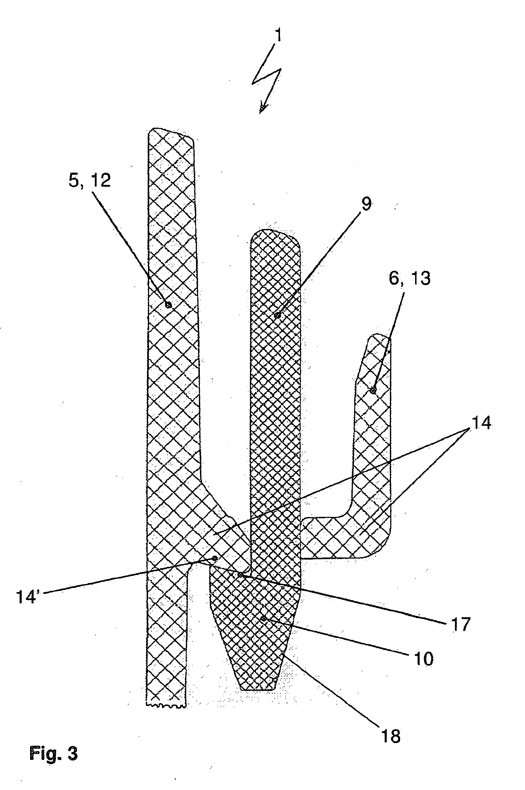

In der Fig. 3, welche eine Gehäusewand 11 des Airbagmoduls gemäß Fig. 1 beziehungsweise Fig. 2 nochmals in einer stark schematisierten Schnittdarstellung zeigt, wird das zuvor Erläuterte nochmals deutlich. Wie aus der Figur ersichtlich ist, weist der Durchbruch 15 in dem die beiden Schenkel 12, 13 des U-Profils miteinander verbindenden Flächenabschnitt 14 eine gegenüber der entsprechenden Erstreckung des Hakens 10 des Rastelements 9 geringere Breite auf. Aufgrund der Elastizität des äußeren Schenkels 13 kann der Haken aber dennoch durch den entsprechenden Durchbruch 15 hindurchgedrückt werden. Zur Verrastung mit dem Gehäuse 1 greifen dann die durch die jeweiligen Durchbrüche 15 hindurchgedrückten Haken 10 der Rastelemente 9 jeweils unter den an der inneren Kontur 5 des doppelwandigen Gehäuseabschnitts 4 angeordneten Vorsprung 14', welcher von einem inneren Teil des die Schenkel des U-Profils miteinander verbinden Flächenabschnitts 14 ausgebildet wird. Hierdurch erfolgt die Einleitung der beim Fangstoß entstehenden und auf den Haltering 2 wirkenden Kräfte in die steife Gehäusewand 11 beziehungsweise Seitenwand des Gehäuses 1. Zur weiteren Erhöhung der Rastwirkung und damit des Haltes des Luftsacks an dem Gehäuse 1 sind die Haken 10 bei dem in der Figur gezeigten Beispiel neben ihrer Ausrichtung in Richtung des Gehäuses 1 noch geringfügig nach oben, das heißt entgegen der sonstigen Erstreckung der Rastelemente 9 gerichtet, während der Absatz 14' eine dazu komplementäre Ausrichtung aufweist.

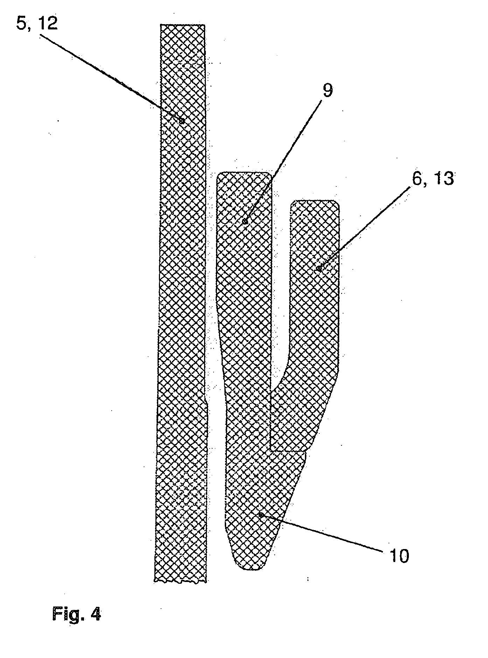

Im Vergleich dazu zeigt die Fig. 4 die Verhältnisse bei den aus dem Stand der Technik bekannten Lösungen. Hier ist der Haken 10 eines vergleichbaren Rastelements 9 an der elastischen äußeren Kontur 13 des doppelwandigen Gehäuseabschnitts verrastet. Die Kräfte des Fangstoßes werden hierbei in die nachgiebige äußere Kontur 6 eingeleitet. Um dennoch eine belastbare Verbindung zu erhalten beziehungsweise zu gewährleisten, sind daher für die Verschnappung sehr hohe Vorspannkräfte erforderlich, welche wiederum hohe Montagekräfte erfordern und dadurch die Montage erschweren und im ungünstigen Fall zu Beschädigungen dieser Kontur 6 beim Montageprozess führen können.

### Bezugszeichenliste

- 1: Gehäuse
- 2: Haltering
- 3: Austrittsöffnung
- 4: doppelwandiger Gehäuseabschnitt
- 5: innere Kontur
- 6: äußere Kontur
- 7: Zwischenraum
- 8: Öffnung
- 9: Rastelement
- 10: Haken
- 11: Gehäusewand
- 12: innerer Schenkel
- 13: äußerer Schenkel
- 14: Flächenabschnitt
- 14': Vorsprung
- 15: Durchbruch
- 16: Schlitz
- 17: Absatz
- 18: Abschrägung
- 19: Gasgenerator

## Patentansprüche

1. Airbagmodul, bestehend aus einem Gehäuse (1) zur Aufnahme eines zusammengefalteten, mit Gas befüllbaren Luftsacks und eines Gasgenerators (19) und aus einem Haltering (2) zur Festlegung des Luftsacks in dem Gehäuse (1), welches in einem die Austrittsöffnung (3) für den sich bei der Auslösung des Airbags durch Befüllung mit dem Gas des Gasgenerators (19) schlagartig entfaltenden Luftsack einfassenden Gehäuseabschnitt (4) zumindest partiell doppelwandig ausgebildet ist, wobei der von dem Luftsack im eingebauten Zustand umschlungene Haltering (2) zur Festlegung des Luftsacks in einen zwischen einer inneren Kontur (5) und einer äußeren Kontur (6) des bezüglich des Umfangs (u) zumindest partiell durch eine U-förmige in Richtung der Austrittsöffnung (3) geöffnete Profilierung der Gehäusewand (11) gebildeten doppelwandigen Gehäuseabschnitts (4) bestehenden Zwischenraum (7) eingefügt und an der Außenseite des Gehäuses (1) mittels mehrerer auf seinem Umfang angeordneter, sich annähernd senkrecht zur Öffnung (8) des Halterings (2) erstreckender und einen als Haken (10) wirkenden Abschnitt aufweisender Rastelemente (9) verrastet ist, wobei die Haken (10) der Rastelemente (9) nach innen in Richtung der Gehäusewand (11) gerichtet und mit dem Gehäuse (1) verrastet sind, indem sie jeweils unter einen nach außen gerichteten Vorsprung (14') an der inneren Kontur (5) des doppelwandigen Gehäuseabschnitts (4) der Gehäusewand (11) greifen,
**dadurch gekennzeichnet, dass**
der die beiden Schenkel (12, 13) des entsprechenden U-Profils miteinander verbindende Flächenabschnitt (14) mehrere von den Rastelementen des Halterings (2) durchragte Durchbrüche (15) aufweist, deren Rand auf der dem inneren, die innen gelegene Kontur (5) der Gehäusewand (11) ausbildenden Schenkel (12) des U-Profils zugewandten Seite von dem Haken (10) des jeweiligen sie durchragenden Rastelements (9) hintergriffen wird, wobei die Breite der Durchbrüche (15), bezogen auf ihre Erstreckung vom inneren Schenkel (12) zum äußeren Schenkel (13) des U-Profils geringer ist als die bezüglich der gleichen Erstreckungsrichtung gegebene Länge des Hakens (10) der Rastelemente (9), die Haken (10) der Rastelemente (9) aber bei der Montage des Halterings (2) aufgrund einer elastischen Ausbildung des äußeren Schenkels (13) des U-Profils dennoch durch die Durchbrüche (15) hindurchführbar sind.

2. Airbagmodul nach Anspruch 1, **dadurch gekennzeichnet, dass** der äußere Schenkel (13) des U-Profils zur Erhöhung seiner Elastizität korrespondierend mit der Anordnung der in dem die Schenkel (12, 13) des U-Profils verbinden Flächenbereich (14) angeordneten Durchbrüche (15) bezüglich des Umfangs (u) der von dem U-Profil eingefassten Austrittsöffnung (3) für den Luftsack mehrere jeweils vom Übergang dieses Schenkels (13) in den die Schenkel (12, 13) verbindenden Flächenbereich (14) ausgehende, sich in Richtung der Austrittsöffnung (3) erstreckende Schlitze (16) aufweist.

3. Airbagmodul nach Anspruch 1 oder 2, **dadurch gekennzeichnet, dass** der Abstand der das U-Profil ausbildenden Schenkel sich in Richtung des sie miteinander verbindenden Flächenbereichs (14) verringert.

4. Airbagmodul nach einem der Ansprüche 1 bis 3, **dadurch gekennzeichnet, dass** die in Form eines flachen Streifens ausgebildeten Rastelemente (9) zur Ausbildung der Haken (10) im Bereich ihrer Enden einen Absatz (17) mit einem sich daran anschließenden verdickten Abschnitt aufweisen.

5. Airbagmodul nach Anspruch 4, **dadurch gekennzeichnet, dass** die Rastelemente (9) in dem verdickten Abschnitt auf ihrer nach außen gewandten Seite eine nach innen gerichtete Abschrägung (18) aufweisen.

6. Airbagmodul nach einem der Ansprüche 1 bis 3, **dadurch gekennzeichnet, dass** die Rastelemente (9) zur Ausbildung der Haken (10) an ihren Enden in Richtung der Gehäusewand (11) des Airbagmoduls abgewinkelt sind.

7. Airbagmodul nach einem der Ansprüche 1 bis 3, **dadurch gekennzeichnet, dass** die Rastelemente (9) zur Ausbildung der Haken (10) an ihren Enden in einem Radius in Richtung der Gehäusewand (11) gebogen sind.

8. Airbagmodul nach einem der Ansprüche 1 bis 7, **dadurch gekennzeichnet, dass** die Haken der Gehäusewand (11) zugewandt und geringfügig in Richtung der Öffnung (8) des Halterings (2) gerichtet sind und dass der von ihnen hintergriffene Vorsprung (14') eine dazu komplementäre Ausrichtung aufweist.

## Claims

1. Airbag module consisting of a housing (1) for accommodating a folded-up airbag, which can be filled with gas, and a gas generator (19), and of a retaining ring (2) for fixing the airbag in the housing (1) which is at least partially of double-walled design in a housing section (4) surrounding the outlet opening (3) for the airbag, which is abruptly deployed by being filled with the gas from the gas generator (19) when the airbag is triggered, wherein the retaining ring (2) which, in the fitted state, is enclosed by the airbag and is intended for fixing the airbag is fitted into an intermediate space (7) existing between an inner contour (5) and an outer contour (6) of the double-walled housing section (4), which is at least partially formed with regard to the circumference (u) by a U-shaped profiling of the housing wall (11), said profiling being open in the direction of the outlet opening (3), and is latched to the outside of the housing (1) by means of a plurality of latching elements (9) which are arranged on the circumference of the housing, extend approximately perpendicularly to the opening (8) in the retaining ring (2) and have a section acting as hooks (10), wherein the hooks (10) of the latching elements (9) are directed inwards towards the housing wall (11) and are latched to the housing (1) by gripping in each case under an outwardly directed projection (14') on the inner wall (5) of the double-walled housing section (4) of the housing wall (11), **characterized in that** the surface section (14) connecting the two limbs (12, 13) of the corresponding U profile to each other has a plurality of apertures (15) through which the latching elements of the retaining ring (2) protrude and the border of which on the side facing the inner limb (12) of the U profile, which limb forms the internal contour (5) of the housing wall (11), is engaged behind by the hook (10) of the particular latching element (9) protruding through said apertures, the width of the apertures (15), with reference to the extent thereof from the inner limb (12) to the outer limb (13) of the U profile, being smaller than the length of the hook (10) of the latching elements (9) in the same direction of extent, but, when the retaining ring (2) is fitted, the hooks (10) of the latching elements (9) can nevertheless be guided through the apertures (15) owing to an elastic design of the outer limb (13) of the U profile.

2. Airbag module according to Claim 1, **characterized in that**, in order to increase its elasticity, the outer limb (13) of the U profile has a plurality of slots (16), which each emerge from the transition of said limb (13) into the surface region (14) connecting the limbs (12, 13) and extend in the direction of the outlet opening (3), in a manner corresponding to the arrangement of the apertures (15), which are arranged in the surface region (14) connecting the limbs (12, 13) of the U profile, with respect to the circumference (u) of the outlet opening (3) for the airbag, which outlet opening is surrounded by the U profile.

3. Airbag module according to Claim 1 or 2, **characterized in that** the distance of the limbs forming the U profile decreases in the direction of the surface region (14) connecting said limbs to each other.

4. Airbag module according to one of Claims 1 to 3, **characterized in that**, for the formation of the hooks (10) in the region of the ends thereof, the latching elements (9), which are designed in the form of a flat strip, have a step (17) with an adjoining, thickened section.

5. Airbag module according to Claim 4, **characterized in that** the latching elements (9) have an inwardly directed bevel (18) in the thickened section on the side thereof which faces outwards.

6. Airbag module according to one of Claims 1 to 3, **characterized in that**, for the formation of the hooks (10), the ends of the latching elements (9) are bent in the direction of the housing wall (11) of the airbag module.

7. Airbag module according to one of Claims 1 to 3, **characterized in that**, for the formation of the hooks (10), the ends of the latching elements (9) are curved in a radius in the direction of the housing wall (11).

8. Airbag module according to one of Claims 1 to 7, **characterized in that** the hooks face the housing wall (11) and are directed slightly in the direction of the opening (8) in the retaining ring (2), and **in that** the projection (14') which is engaged behind by said hooks has a complementary alignment.

## Revendications

1. Module d'airbag, constitué d'un boîtier (1) pour recevoir un coussin d'air replié, pouvant être rempli de gaz, et un générateur de gaz (19), et d'une bague de retenue (2) pour la fixation du coussin d'air dans le boîtier (1), qui est réalisé au moins en partie à double paroi dans une portion de boîtier (4) entourant l'ouverture de sortie (3) pour le coussin d'air se dépliant brutalement lors du déploiement de l'airbag par remplissage avec le gaz du générateur de gaz (19), la bague de retenue (2) entourée par le coussin d'air dans l'état installé, pour la fixation du coussin d'air, étant introduite dans un espace intermédiaire (7) existant entre un contour intérieur (5) et un contour extérieur (6) de la portion de boîtier (4) à double paroi formée par rapport à la périphérie (u) au moins en partie par un profilage de la paroi de boîtier (11) en forme de U ouvert dans la direction de l'ouverture de sortie (3), et étant encliquetée du côté extérieur du boîtier (1) au moyen de plusieurs éléments d'encliquetage (9) disposés sur sa périphérie, s'étendant approximativement perpendiculairement à l'ouverture (8) de la bague de retenue (2) et présentant une portion servant de crochet (10), les crochets (10) des éléments d'encliquetage (9) étant orientés vers l'intérieur dans la direction de la paroi de boîtier (11) et étant encliquetés au boîtier (1), en venant en prise à chaque fois sous une saillie (14') orientée vers l'extérieur sur le contour intérieur (5) de la portion de boîtier (4) à double paroi de la paroi de boîtier (11),
**caractérisé en ce que**
la portion de surface (14) reliant l'une à l'autre les deux branches (12, 13) du profilé en U correspondant présente plusieurs orifices (15) traversés par les éléments d'encliquetage de la bague de retenue (2), dont le bord, du côté tourné vers la branche intérieure (12) du profilé en U constituant le contour intérieur (5) de la paroi de boîtier (11) est engagé par l'arrière par le crochet (10) de l'élément d'encliquetage (9) respectif les traversant, la largeur des orifices (15), par rapport à leur étendue depuis la branche intérieure (12) jusqu'à la branche extérieure (13) du profilé en U étant inférieure à la longueur du crochet (10) des éléments d'encliquetage (9) donnée par rapport à la même direction d'étendue, les crochets (10) des éléments d'encliquetage (9) pouvant toutefois, lors du montage de la bague de retenue (2), être guidés à travers les orifices (15) du fait d'une réalisation élastique de la branche extérieure (13) du profilé en U.

2. Module d'airbag selon la revendication 1, **caractérisé en ce que** la branche extérieure (13) du profilé en U présente, pour augmenter son élasticité de manière correspondante à l'agencement des orifices (15) disposés dans la région de surface (14) reliant les branches (12, 13) du profilé en U par rapport à la périphérie (u) de l'ouverture de sortie (3) pour le coussin d'air entourée par le profilé en U, plusieurs fentes (16) s'étendant dans la direction de l'ouverture de sortie (3) et partant de la transition de cette branche (13) dans la région de surface (14) reliant les branches (12, 13).

3. Module d'airbag selon la revendication 1 ou 2, **caractérisé en ce que** la distance des branches constituant le profilé en U diminue dans la direction de la région de surface (14) qui les relient entre elles.

4. Module d'airbag selon l'une quelconque des revendications 1 à 3, **caractérisé en ce que** les éléments d'encliquetage (9) réalisés sous forme de ruban plat pour la réalisation des crochets (10) présentent dans la région de leurs extrémités un épaulement (17) avec une portion épaissie s'y raccordant.

5. Module d'airbag selon la revendication 4, **caractérisé en ce que** les éléments d'encliquetage (9) présentent, dans la portion épaissie sur leur côté tourné vers l'extérieur un biseautage (18) orienté vers l'intérieur.

6. Module d'airbag selon l'une quelconque des revendications 1 à 3, **caractérisé en ce que** les éléments d'encliquetage (9) pour la réalisation des crochets (10) sont coudés à leurs extrémités dans la direction de la paroi du boîtier (11) du module d'airbag.

7. Module d'airbag selon l'une quelconque des revendications 1 à 3, **caractérisé en ce que** les éléments d'encliquetage (9) pour la réalisation des crochets (10) sont courbés à leurs extrémités suivant un rayon dans la direction de la paroi de boîtier (11).

8. Module d'airbag selon l'une quelconque des revendications 1 à 7, **caractérisé en ce que** les crochets sont tournés vers la paroi de boîtier (11) et sont orientés légèrement dans la direction de l'ouverture (8) de la bague de retenue (2) et **en ce que** la saillie (14') engagée par l'arrière par ceux-ci présente une orientation qui leur est complémentaire.
